# EUROPEAN PATENT APPLICATION

(11) **EP 0 841 598 A2**
(43) Date of publication of application: **13.05.1998**
(21) Application number: 97119727.2
(22) Date of filing: 11.11.1997
(51) Int. Cl.: G03G 15/043, H04N 1/40

(54) **Laser light amount control device and image recording apparatus using the device**

(30) Priority: 12.11.1996 JP 300076/96
(71) Applicant: CANON KABUSHIKI KAISHA, Tokyo (JP)
(72) Inventor: Aoki, Akio, Ohta-ku, Tokyo (JP)
(74) Representative: Weser, Wolfgang

(57) **Abstract**

A laser light amount control device comprises a semiconductor laser, a driving device for driving the semiconductor laser, the driving device comprising a PWM modulator having a pulse width adjusting function, a light amount monitor device for monitoring an amount of light emitted from the semiconductor laser and a feedback control device for comparing an output from the light amount monitor device with a predetermined value and increasing or decreasing a pulse width of the PWM modulator, based on the comparison. An image recording apparatus comprises the laser light amount control device and a recording medium on which an image is to be recorded by the laser beam from the semiconductor laser.

## Description

### BACKGROUND OF THE INVENTION

### Field of the Invention

The present invention relates to image recording apparatus incorporating a laser light amount control device of the electrophotographic method or the like and, more particularly, to a printer device for processing multi-level image signals to record a stable halftone image on a sheet.

### Related Background Art

Generally speaking, examples of the image recording apparatus include laser printers for exposing a photosensitive member to a laser beam according to image signals sent from a personal computer or the like, developing a latent image formed therein, and transferring the developed image onto a recording sheet to print the image thereon, ink jet printers for directly discharging ink onto the recording sheet to print the image, dot printers for printing the image by direct punching or heating on the recording sheet, and so on. The image recording apparatus is also used in copiers for reading an original line by line to project a laser beam onto the photosensitive member.

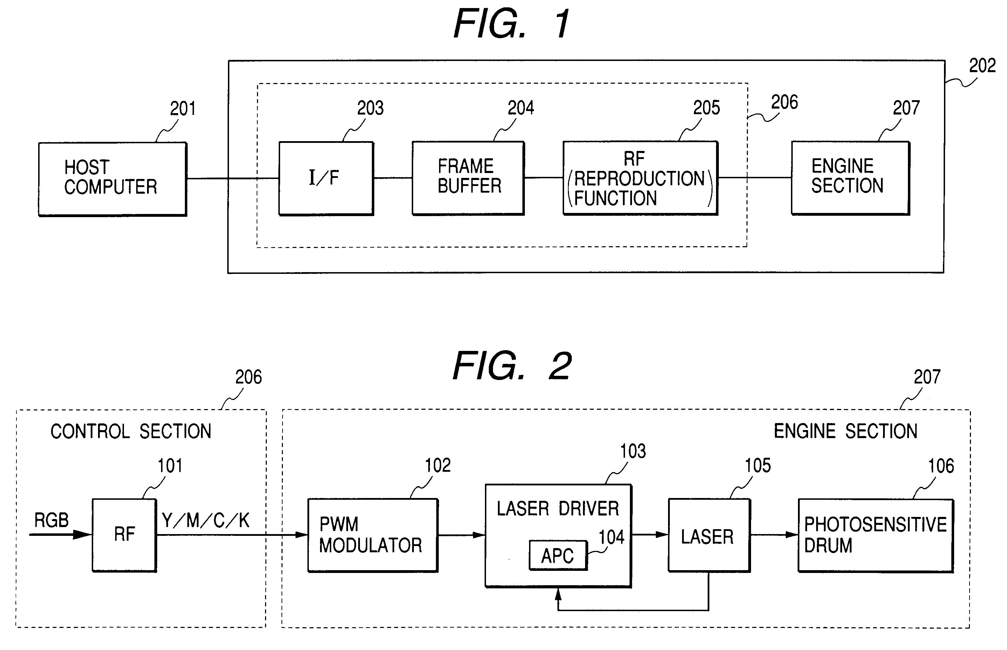

Here is the structure of a printer device of the laser method described as a prior art example as shown in Fig. 1. In Fig. 1, reference numeral 201 designates a host computer, which is an information source of image information to be printed, and 202 the printer body. The printer body 202 is composed of controller section 206 consisting of interface 203 of input section connected to the host computer 201, frame buffer 204 for retaining the data transmitted from the host computer 201, as image data to be printed, and reproduction section (hereinafter referred to as RF section) 205 for effecting masking and UCR processing on an output from frame buffer 204 to convert the output to a signal making a printer engine; and engine section 207 for receiving output data from the controller section 206 to print it on a recording sheet.

Now described is the operation of the printer device constructed in the above structure. Multi-level image data supplied from the host computer 201 is taken through the interface 203 into the frame buffer 204 to be retained therein, and upon printing the image data is read out of the frame buffer 204 in synchronization with a recording speed of the engine section 207. The image data thus read is converted to signals matching the characteristics of the engine section 207, in the RF section 205. For example, if the image input data is input of RGB signals, they are converted to signals that can be handled by the engine section 207, i.e., to image data of variable density of four colors of YMCK in the case of full-color printing of YMCK (Y: yellow, M: magenta, C: cyan, K: black). At this time, the data is subjected to masking and UCR processing optimized for the process characteristics of engine section 207, i.e., the toner characteristics and developing bias-density characteristics. The engine section 207 prints out the image data after the above conversion process.

Fig. 2 is a block diagram to show the details of the engine section 207 associated with halftone processing. The image data of Y, M, C, and K produced in the RF section 101 of controller 206 in the above process is sent to the engine section 207, and latent images of the respective colors are successively formed on the photosensitive drum 106 by laser 105 through pulse-width modulation unit (hereinafter referred to as PWM modulator) 102 and laser driver 103. The laser driver 103 has a light amount stabilizing circuit (hereinafter referred to as an APC circuit) 104 for stabilizing the light amount of laser, as well as a circuit for driving the laser by a modulation signal. Since the processes after the formation of latent image are of the ordinary methods, description thereof is omitted herein.

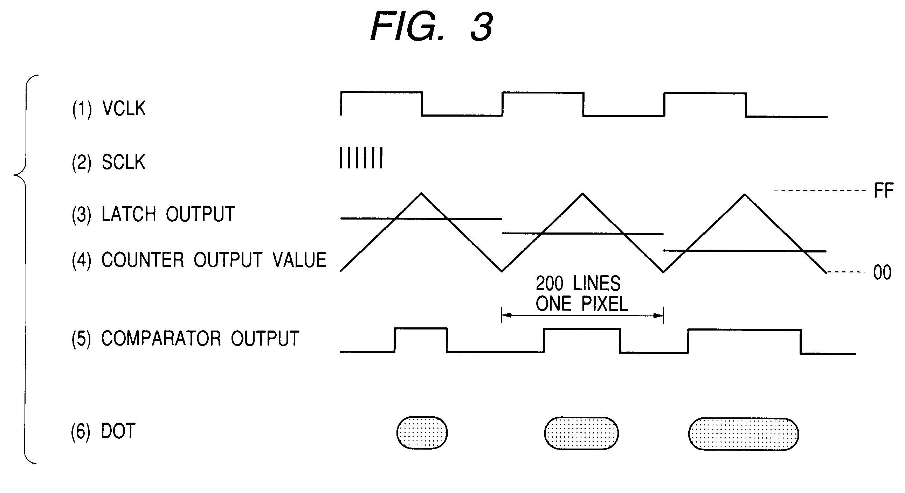

Operative waveform diagrams of PWM modulator 102 are shown in Fig. 3. Referring to Fig. 3, one pixel is read out of the RF section 101 in one cycle of video clock VCLK (1), output value (4) from internal counter is sampled in the relation of 200 samplings per pixel by sampling clock SCLK (2), a slice level is determined for a triangular wave of counter output by latch value (3) varying according to the image data from the RF section 101, a period above the slice level is determined as comparator output (5), and this comparator output (5) is outputted to the laser driver 103. As shown in Fig. 3, by means of the circuit to change the width of its output pulse in proportion to the level of input data, halftones are reproduced by controlling amounts of laser light (lasing times) according to pulse widths from the circuit and thereby controlling dot sizes as shown by (6) in the same drawing.

Incidentally, pulse widths of individual PWM modulators as described above vary depending upon deviation and temperature characteristics of circuit elements, and lasers also have individual dispersion. Therefore, amounts of emitted light normally vary against same image data, depending upon combination of PWM modulator with laser. Conventional approaches were thus such that a resistor of a pulse width adjusting circuit connected to the PWM modulator was given as a pre-set resistor and it was manually adjusted every printer device and such that the resistor of the adjusting circuit was given as a printed resistor and it was trimmed by laser trimming. Specifically, the offset and amplitude of the triangular wave shown in the counter output value (4) of Fig. 3 were adjusted to output suitable dot widths to the laser.

The above conventional methods, however, required the adjustment of individual image recording apparatus for the dispersion of PWM modulator and laser, which posed the problem of cost such as increase of adjustment cost of resistor in the fabrication process or equipment investment of laser trimming device.

### SUMMARY OF THE INVENTION

For solving the above problem, a laser light amount control device of the present invention comprises a semiconductor laser, light amount monitor means for monitoring an amount of light emitted from said semiconductor laser and generating a voltage according to the amount of light emitted from said semiconductor laser, a PWM modulator having a function to adjust a pulse width, and feedback control means for comparing an output from said light amount monitor means with a predetermined value and increasing or decreasing the pulse width of said PWM modulator, based on the comparison, thereby eliminating the need for adjustment of pulse width by resistor and, as a result, automatically correcting variation in the amount of light due to secular change of semiconductor laser. This semiconductor laser is driven according to the pulse width of the PWM modulator, the amount of light emitted from the semiconductor laser is monitored, the monitored output is integrated over a predetermined period of time, an integration result is compared with the predetermined value corresponding to either the maximum or the minimum of amount of emitted light, and the pulse width of the PWM modulator is controlled according to a difference from the compared value, whereby the dispersion among devices can be overcome, the manufacturing cost can be decreased, and stable amounts of light can be obtained from the semiconductor laser with high quality.

### BRIEF DESCRIPTION OF THE DRAWINGS

Fig. 1 is a drawing to show an example of the general structure of a printer device;
Fig. 2 is a block diagram of a halftone image processing section in the general structure of printer of the conventional example;
Fig. 3 is an explanatory drawing of PWM modulation;
Fig. 4 is a block diagram of the first embodiment of the present invention;
Fig. 5 is an explanatory drawing of automatic adjustment in the first embodiment of the present invention;
Fig. 6 is a detailed view of the APC circuit in the second embodiment of the present invention; and
Fig. 7 is a block diagram in the third embodiment of the present invention.

### DETAILED DESCRIPTION OF THE PREFERRED EMBODIMENTS

Each embodiment according to the present invention will be described in detail by reference to the drawings.

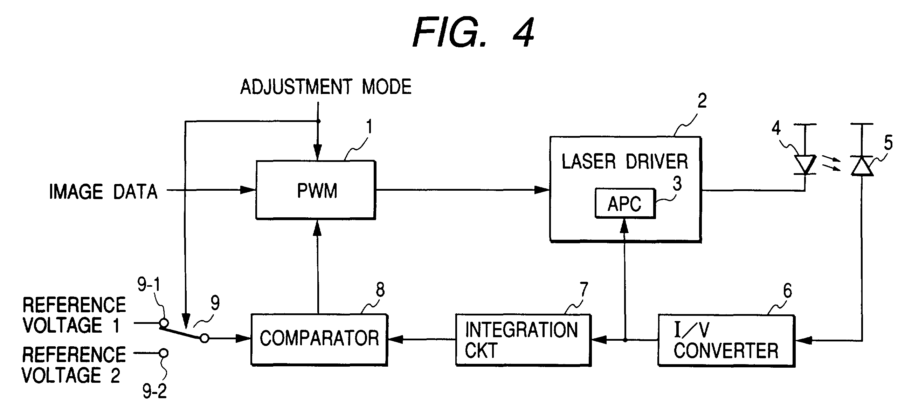

Fig. 4 is a block diagram of a pulse width automatic adjustment section in the first embodiment of the laser light amount control device used in the printer device for processing multi-level image signals to record a stable halftone image on a sheet according to the present invention.

In Fig. 4, the image data sent out of the controller for converting data in the RF section so as to match the characteristics of the engine section is put into the PWM modulator 1, from which a pulse having a pulse width associated with the image data is outputted. Receiving this pulse, the laser driver 2 drives the semiconductor laser 4, and laser light from the semiconductor laser 4 forms a latent image on the unrepresented photosensitive drum being a recording medium.

On the other hand, part of the laser light from the semiconductor laser 4 is received by photodiode 5 for monitoring of light amount, I/V converter 6 converts a receptive photocurrent to a voltage, the voltage is supplied to integration circuit 7 and also supplied to APC circuit 3 in the laser driver 2, and, based thereon, the amount of emitted light is stabilized.

The comparator 8 receives an output of integration circuit 7 and either reference voltage 1 or reference voltage 2 through switch 9, and an output from the comparator 8 is applied to an input terminal for adjustment of pulse width of the PWM modulator 1.

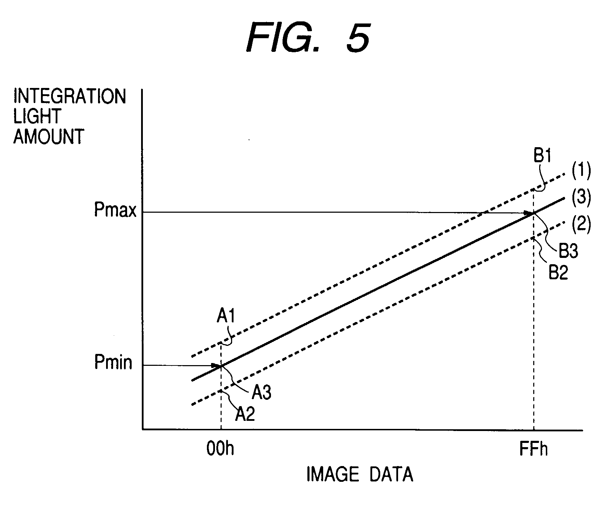

The pulse width automatic adjusting method will be described below referring to Fig. 5. Fig. 5 shows characteristics of integrated light amount against input data, obtained from the sum of individual characteristics of the PWM modulator 1, laser driver 2, and semiconductor laser 4. In Fig. 5, straight lines (1) and (2) indicate a range of maximum light amount dispersion, wherein (1) indicates the maximum light amount and (2) does the minimum light amount. The integrated light amount characteristics in the combination of the all PWM modulator 1, laser driver 2, and semiconductor laser 4 are within this range. Straight line (3) indicates desired light amount characteristics.

First described is adjustment of maximum light amount. For example, during standby operation of printer engine and during an adjustment period, image data indicating the maximum, which is an adjustment mode signal of amount of emitted light from the semiconductor laser 4, is supplied to the PWM modulator 1, and a maximum pulse width adjustment mode signal is supplied to an adjustment mode input terminal of the PWM modulator 1 and to the switch 9. The switch 9 is changed over to the terminal input 9-1 side to which the reference voltage 1 corresponding to the target maximum light amount Pmax of Fig. 5 is applied. The photodiode 5 for detecting the monitor current receives the output from the semiconductor laser 4 driven by the image data for standby and adjustment to output an electric current according to the amount of emitted light, the I/V converter 6 converts the current to a voltage value to output the voltage value to the APC circuit 3 for stabilization of light amount and to the integration circuit. The integration circuit 7 integrates the voltage value during a period in which the image data for adjustment is supplied, and it outputs a voltage of integration result to the comparator 8. When the output of the integration circuit 7 is higher than the reference voltage 1, the PWM modulator 1 is controlled so as to narrow the pulse width; when the output is lower than the reference voltage 1, the PWM modulator 1 is controlled so as to widen the pulse width.

Next described is adjustment of minimum light amount. Similarly as described above, during the standby of engine and during the adjustment period, image data indicating the minimum, which is an adjustment mode signal of amount of emitted light from the semiconductor laser 4, is supplied to the PWM modulator 1, and a minimum pulse width adjustment mode signal is supplied to the adjustment mode input terminal of the PWM modulator 1 and to the switch 9. At this time the switch 9 is changed over to the input terminal 9-2 side to which the reference voltage 2 corresponding to the target minimum light amount Pmin of Fig. 5 is applied. When the output of the integration circuit 7 is higher than the reference voltage 2, the PWM modulator 1 is controlled so as to narrow the pulse width; when the output is lower than the reference voltage 2, the PWM modulator 1 is controlled so as to widen the pulse width.

In the above arrangement, the PWM modulator 1 adjusts the maximum or minimum pulse width, for example, by varying the offset and amplitude of triangular wave voltage inside, in response to the signal voltage from the comparator 8 retaining the voltage output set during the above adjustment. The time of emission of light from the semiconductor laser 4 is set by this adjustment of pulse width.

In the above-stated manner, the maximum light amount Pmax and minimum light amount Pmin are specifically determined in any combination of PWM modulator 1, laser driver 2, and semiconductor laser 4, the straight line (3), which is the desired, integrated light amount characteristics of Fig. 5, is determined, and it becomes possible to form and record stable halftone images along the straight line (3), at the points of the maximum light amount Pmax and the minimum light amount Pmin against any dispersion. Although the reference voltages were described as reference voltages 1 and 2, the number of reference voltages may be increased by taking further reference voltages at an intermediate point or other points of the image data, whereby the characteristics of semiconductor laser can be matched with the desired light amount characteristics of straight line (3) more accurately, so as to suppress the dispersion. It also became possible to correct the secular change of laser by the arrangement including the feedback control means as an automatic adjusting function.

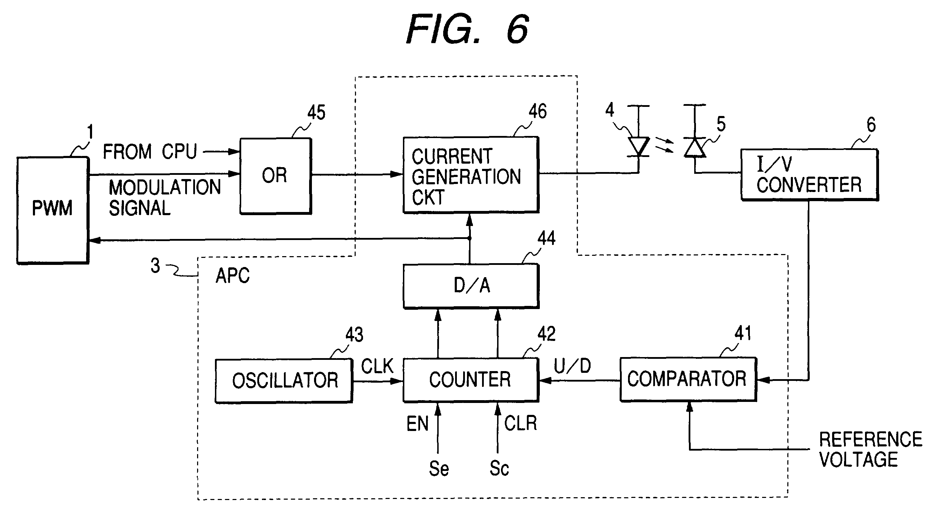

Fig. 6 is a block diagram to show the second embodiment of the present invention. Fig. 6 shows the details of the APC circuit 3 used in Fig. 4. The semiconductor laser 4 is pumped by the driving current outputted from current generation circuit 46, so as to emit the laser light in an amount of light corresponding to the driving current. An amount of the laser beam emitted from the semiconductor laser 4 is detected by the photodiode 5, the current corresponding to the light amount is supplied to the I/V converter 6, and the converter converts it to a voltage signal corresponding to the light amount. Accordingly, the photodiode 5 and I/V converter 6 function as a light amount monitor circuit.

The above voltage signal is compared with a reference signal from a reference voltage source in voltage comparator 41 and an output of the comparison is supplied as an up-down control signal to up-down counter 42. The counter 42 is constructed to count clocks of a predetermined frequency from oscillator 43, clear terminal CLR of the counter 42 is cleared by clear signal Sc sent out of the unrepresented CPU, and a count enable signal Se is supplied to its enable terminal EN.

A digital signal output from the counter 42 is converted to an analog signal in subsequent D/A converter 44, and thereafter it is supplied as a current control signal to the current generation circuit 46.

When the count enable signal Se is obtained after the counter 42 is cleared by the clear signal Sc, the CPU of the engine section supplies a control signal in place of the modulation signal through OR circuit 45. At the same time as it, the counter 42 starts count-up operation with the count enable signal Se, the driving current to the semiconductor laser 4 gradually increases with this operation of counter 42, and the amount of laser light also increases.

Before the semiconductor laser 4 reaches a predetermined light amount, the comparison output of comparator 41 is maintained at the high level, so that the counter 42 continues the count-up operation. When the laser reaches the predetermined level, the comparison output of comparator 41 is inverted to the low level. Then the counter 42 transitions into a count-down mode, and the light amount gradually decreases therewith, which is inverse to the above-stated operation. When the light amount is lowered to a level where the comparison output of comparator 41 is inverted, the operation mode of counter 42 is again inverted, so as to continue the count-up operation.

Therefore, if the count enable signal Se is controlled so as to be off after a lapse of a predetermined time, the counter 42 will hold the output level immediately before off, so that the light amount will be always kept at the constant level.

The above arrangement uses the APC circuit 3 to perform the same feedback control as the APC control. Since the control object is the PWM modulator 1, the adjustment is carried out in the same manner as in the first embodiment; in the case of the adjustment of maximum light amount, count-up and subsequent countdown of the counter 42 is repeated according to the output of comparator 41, the Output from the counter 42 is converted to the analog signal in the D/A converter 44, the analog signal is supplied to the current generation circuit 46 and also to the PWM modulator 1, and the pulse width is set to a one achieving the maximum reference voltage Bmax; in the case of the adjustment of minimum light amount, the pulse width is set to a one achieving the minimum reference voltage Bmin; each set value is obtained as described. The PWM pulse width is thus set according to the target light amount in this way.

In this embodiment the maximum and minimum of PWM pulse width are adjusted to be the respective predetermined values according to the output signal from the APC circuit for stabilizing the amount of emitted light from the semiconductor laser.

Since the present embodiment commonly uses the APC circuit 3 for the APC adjustment and the PWM adjustment, it can simplify the hardware. The APC circuit 3 of the present invention is not limited to only the one of the above method.

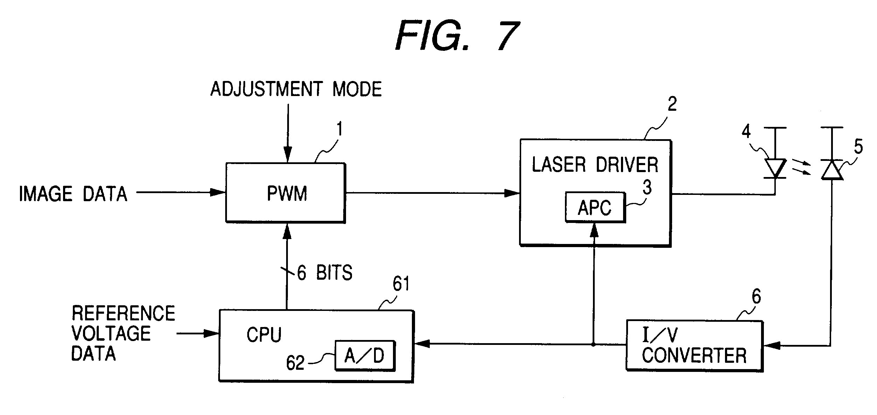

Fig. 7 is a block diagram to show the third embodiment of the present invention. In the present embodiment software of CPU 61 performs the function of the feedback control means comprised of the integration circuit 7 and comparator 8.

The CPU 61 is the one for control of the overall body of the engine section, which enables to perform the adjustment of PWM pulse width without increase in cost of the hardware for using the A/D converter 62 inside. Among the adjustment modes of the PWM modulator, first, in the case of the adjustment of maximum light amount of PWM modulator 1, the image data is supplied as maximum image data for adjustment to the PWM modulator 1 and the laser driver 2 drives the semiconductor laser 4 by current so as to make the semiconductor laser 4 emit light. This emitted light is detected as an electric current by the photodiode 5, the current is converted to a voltage by the I/V converter 6, and the voltage is outputted to the APC circuit 3 and to the A/D converter 62 of CPU 61. The APC circuit 3 stabilizes the amount of emitted light from the semiconductor laser 4 so as to keep the light amount constant. The CPU 61 compares the output of A/D converter 62 with a predetermined value and sends a control signal according to a difference level from the desired maximum to the PWM modulator 1. Similarly, the image data is supplied as minimum image data for adjustment to the PWM modulator 1, and the laser driver 2 drives the semiconductor laser 4 by current to make the semiconductor laser 4 emit light. This emitted light is detected as an electric current by the photodiode 5, the current is converted to a voltage by the I/V converter 6, and the voltage is outputted to the APC circuit 3 and to the A/D converter 62 of CPU 61. The CPU 61 compares the output of the A/D converter 62 with a predetermined value and sends a control signal according to a difference level from the desired minimum to the PWM modulator 1. In this way the control voltage to the PWM modulator 1 is supplied so that the amount of emitted light from the laser against the image data shown in Fig. 5 becomes an amount of emitted light corresponding to the desired straight line (3).

This embodiment is arranged using the PWM modulator 1 having the pulse width adjusting function with digital input. Correction data (output data of A/D converter) corresponding to the maximum and minimum pulse widths is stored in a nonvolatile memory in the CPU 61 provided in the engine section. Since the nonvolatile memory is the one provided in the printer for storing the status of printer, no load is added to the printer.

As described above, the apparatus according to the present invention comprises the semiconductor laser, the light amount monitor means for monitoring the amount of emitted light from the semiconductor laser to generate the voltage according to the amount of emitted light from the semiconductor laser, the means for stabilizing the amount of emitted light from the semiconductor laser, the PWM modulator having the pulse width adjusting function, and the feedback control means for comparing the output of the light amount monitor means with the predetermined value and increasing or decreasing the pulse width of the PWM modulator, based on the comparison, whereby the adjustment cost of variable resistor or the like is eliminated, whereby automatic adjustment of pulse width can be realized without increase of cost, and whereby, as a result, the variation in light amount due to the secular change of laser can be automatically corrected.

## Claims

1. A laser light amount control device comprising:
a semiconductor laser;
driving means for driving said semiconductor laser, said driving means comprising a PWM modulator having a pulse width adjusting function;
light amount monitor means for monitoring an amount of light emitted from said semiconductor laser; and
feedback control means for comparing an output from said light amount monitor means with a predetermined value and increasing or decreasing a pulse width of said PWM modulator, based on said comparing.

2. A laser light amount control device according to Claim 1, wherein said PWM modulator controls a laser emission time by the pulse width.

3. A laser light amount control device according to Claim 1, wherein said light amount monitor means generates a voltage according to the amount of light emitted from said semiconductor laser.

4. A laser light amount control device according to Claim 1, wherein said feedback control means comprises integration means for integrating the output from said light amount monitor means and comparing means for comparing an output from said integration means with the maximum or the minimum of the amount of light emitted from said semiconductor laser and wherein the amount of light emitted from said semiconductor laser is set according to an output from said comparing means.

5. A laser light amount control device according to Claim 1, wherein feedback control by said feedback control means is carried out by software.

6. A method for adjusting an amount of light emitted in a case wherein a semiconductor laser is made to emit light by driving means comprising a PWM modulator having a pulse width adjusting function, said method comprising:
a step of making the semiconductor laser emit the light by the driving means comprising the PWM modulator having the pulse width adjusting function;
a step of monitoring an amount of the light emitted from said semiconductor laser; and
a step of comparing an output obtained in said monitoring step with a predetermined value and increasing or decreasing a pulse width of said PWM modulator, based on said comparing.

7. A method for adjusting an amount of light emitted in a case wherein a semiconductor laser is made to emit light by driving means comprising a PWM modulator having a pulse width adjusting function, said method comprising:
a step of making the semiconductor laser emit the light by the driving means comprising the PWM modulator having the pulse width adjusting function;
a step of monitoring an amount of the light emitted from said semiconductor laser;
a step of integrating an output obtained in said monitoring step;
a step of comparing an output integrated in said integrating step with the maximum and the minimum of the amount of light emitted from said semiconductor laser; and
a step of setting the amount of light emitted from said semiconductor laser in accordance with an output obtained in said comparing step.

8. An image recording apparatus comprising:
a semiconductor laser;
driving means for driving said semiconductor laser, said driving means comprising a PWM modulator having a pulse width adjusting function;
light amount monitor means for monitoring an amount of light emitted from said semiconductor laser;
feedback control means for comparing an output from said light amount monitor means with a predetermined value and increasing or decreasing a pulse width of said PWM modulator, based on said comparing; and
a recording medium on which an image is to be recorded by a laser beam from said semiconductor laser.

9. An image recording apparatus according to Claim 8, wherein said PWM modulator controls a laser emission time by the pulse width.

10. An image recording apparatus according to Claim 8, wherein said light amount monitor means generates a voltage according to the amount of light emitted from said semiconductor laser.

11. An image recording apparatus according to Claim 8, wherein said feedback control means comprises integration means for integrating the output from said light amount monitor means and comparing means for comparing an output from said integration means with the maximum and the minimum of the amount of light emitted from said semiconductor laser and wherein the amount of light emitted from said semiconductor laser is set according to an output from said comparing means.

12. An image recording apparatus according to Claim 8, wherein feedback control by said feedback control means is carried out by software.
